# EUROPEAN PATENT SPECIFICATION

(11) **EP 3 942 012 B1**
(45) Date of publication and mention of the grant of the patent: **18.01.2023**
(21) Application number: 21725731.0
(22) Date of filing: 11.05.2021
(51) Int. Cl.: B67D 1/00, B67D 1/12, C12C 11/11, C12G 3/005, C12G 3/06

(54) **DEVICE FOR PREPARING AND DISPENSING RECONSTITUTED BEER**
GERÄT ZUR ZUBEREITUNG EINES BIERÄHNLICHEN GETRÄNKS
APPAREIL POUR PRÉPARER UNE BOISSON DE TYPE BIÈRE

(30) Priority: 15.05.2020 EP 20175078
(43) Date of publication of application: 26.01.2022
(60) Divisional application: 22207839.6
(73) Proprietor: Heineken Supply Chain B.V., 2382 PH Zoeterwoude (NL)
(72) Inventor: BROUWER, Eric Richard, 2382 PH Zoeterwoude (NL); BEKKERS, Augustinus Cornelius Aldegonde Petrus A., 2382 PH Zoeterwoude (NL)
(74) Representative: Nederlandsch Octrooibureau
(86) International application number: PCT/EP2021/062515
(87) International publication number: WO 2021/228877

(56) References cited:
- EP-A1- 3 225 683
- WO-A1-2014/159458
- US-A1- 2016 230 133
- Souci ET AL: "Alcohol free beer" In: "Food Composition and Nutrition tables", 1 January 2015 (2015-01-01), MedPharm, XP055795387, pages 1151-1154, the whole document
- D. E. Briggs ET AL: "Brewing: Science and Practice", , 1 January 2004 (2004-01-01), XP055435010, Retrieved from the Internet: URL:http://fars.itvhe.ac.ir/_fars/Document s/99ae7cc8-c9a8-4356-8d24-f6c208322cb7.pdf [retrieved on 2017-12-13]

## Description

### TECHNICAL FIELD OF THE INVENTION

The present invention relates to a device for preparing and dispensing reconstituted beer. In one embodiment the device comprises:
- a first vessel containing a liquid concentrate for preparing a beer;
- a second vessel containing an alcoholic liquid;
- a source of water;
- a source of pressurized carbon dioxide;
- a reconstitution unit;
- a dispensing unit for dispensing the alcoholic beer;
wherein the device is operable (i) to form a reconstituted beer comprising water from the source of water, carbon dioxide from the source of pressurized carbon dioxide, liquid concentrate from the first vessel and alcoholic liquid from the second vessel, in the reconstitution unit and (ii) to dispense the reconstituted beer from the dispensing unit.

The invention also relates to a device comprising:
- a first vessel containing a liquid concentrate for preparing a beer;
- a second vessel containing an alcoholic liquid;
- a source of carbonated water;
- a reconstitution unit;
- a dispensing unit for dispensing the alcoholic beer;
wherein the device is operable (i) to form a reconstituted beer comprising carbonated water from the source of carbonated water, liquid concentrate from the first vessel and alcoholic liquid from the second vessel, in the reconstitution unit and (ii) to dispense the reconstituted beer from the dispensing unit.

The liquid concentrate in the first vessel an ethanol content of 0-1 % ABV. The alcoholic liquid in the second vessel contains 12-100 wt.% ethanol and 0-88 wt.% water, ethanol and water together constituting 80-100 wt.% of the alcoholic liquid.

The invention also relates to a method of preparing and dispensing a reconstituted beer using the aforementioned devices.

### BACKGROUND OF THE INVENTION

The popularity of domestic appliances for preparing and dispensing carbonated beverages from concentrated syrup, such as Sodastream^{®}, has grown rapidly. These appliances produce carbonated beverages by carbonating water and mixing the carbonated water with a flavoured syrup. Given the high flexibility and convenience provided by these appliances, it would be desirable to have available beer concentrates from which beer can be produced using similar appliances.

Since beer typically contains more than 90% of water, beer can be concentrated considerably by removing most of the water. The benefits of producing beer from a concentrate have been recognized in the art. However, the production of a beer concentrate that can suitably be used to produce a good quality beer represents a challenging task.

First of all, water should be removed selectively so as to avoid loss of flavour substances, color and/or beer components that contribute to the formation and stability of foam heads. Since the removal of water from beer favours the occurrence of chemical reactions between beer components (e.g. reactions between ethanol and carboxylic acids) and precipitation of solutes (e.g. proteins, sugars), both of which can lead to quality loss during storage, ways need to be found to address these stability issues.

WO 2014/159458 describes an apparatus for making a single serving beverage, the apparatus comprising:
- an outlet operable to eject a beverage therefrom;
- a water reservoir operable to supply water via a water supply line;
- a pod holding compartment operable to releasably receive a disposable beverage pod, the beverage pod comprising a first compartment including an alcohol-free beverage concentrate and a second compartment including ethanol, the pod holding compartment being in communication with the water reservoir and the pressurized gas source;
- a mixing unit operable to mix water from the water supply with the beverage concentrate and the concentrated alcohol concentrate to form a beverage; and
- a housing operable to house the water reservoir, pod holding compartment and mixing unit. The alcohol-free beverage concentrate is in dry or semi-dry form.

WO 2017/167865 describes a single-serve container comprising a malt based beverage concentrate or fermented beverage concentrate, characterized in that said concentrate is in a liquid state, has a dynamic viscosity of maximally 40.10³ mPa.s; a real extract density of at least 2,6°P; and an alcohol content of at least 1 vol%. This patent application further describes a method for obtaining a beverage comprising the steps of:
a. providing a first single-serve container comprising the aforementioned malt based beverage concentrate;
b. providing a second single-serve container containing an ethanol solution having an ethanol concentration of 75 vol% or more;
c. providing a liquid diluent source;
d. mixing a portion of the diluent source with the content of the second single-serve container, to obtain an intermediate liquid mixture having an alcohol content of 30 vol% or less;
e. mixing the content of the first single-serve container with said intermediate liquid mixture and potentially an additional amount of the liquid diluent to obtain a beverage.

EP-A 3 225 683 describes a dispensing apparatus for producing *in situ* a fermented target beverage by addition of a liquid diluent, and for dispensing the thus produced fermented target beverage, said dispensing apparatus comprising:
- a housing for receiving the first chamber,
- a housing for receiving the second chamber,
- a dispensing tubing system comprising an upstream end and a downstream end, the upstream end being coupled to a source of liquid diluent, and fluidly connecting said source of liquid diluent, to the housing for receiving the first chamber, to the housing for receiving the second chamber, and to the downstream end of the dispensing tube, which is open to an outer atmosphere,
characterized in that, a first chamber containing concentrated beverage extracts and a second chamber containing ethanol of at least 80 vol.% purity are loaded in a respective housing, such that the liquid diluent flowing from the upstream end to the downstream end of the dispensing tubing system must flow through the interior of both first and second chambers.

US 2016/230133 describes a method for forming a concentrate from an alcoholic beverage, comprising:
- providing an alcoholic beverage including a solids concentration of 20% or less, and alcohol concentration of 30% or less, and water;
- subjecting the alcoholic beverage to a membrane process by which at least some water and alcohol pass through a membrane to be part of a permeate and other components of the alcoholic beverage do not pass through the membrane and are part of a retentate;
- freezing water in the retentate to form ice; and
- removing ice from the retentate to reduce water content and form a beverage concentrate having a solids concentration of at least 30% and an alcohol concentration of 20% or less.

US 2016/280527 describes an alcoholic beverage forming apparatus operable to dispense an alcoholic beverage by mixing water and alcohol with a flavor medium to form the alcoholic beverage that may be dispensed from the alcoholic beverage forming apparatus, the alcoholic beverage forming apparatus comprising:
- a capsule holder configured to receive a beverage capsule having a flavor medium in an interior thereof;
- a water supply reservoir operable to supply water to a mixing manifold of the alcoholic beverage forming apparatus at a predetermined temperature;
- an alcohol supply reservoir operable to supply alcohol to the mixing manifold of the alcoholic beverage forming apparatus at a predetermined temperature; and
- a dispenser operable to dispense an alcoholic beverage therefrom;
wherein predetermined amounts of the water and alcohol supplied to the mixing manifold are combined therein so as to form an alcoholic beverage mixture, and the alcoholic beverage forming apparatus is operable to supply the alcoholic beverage mixture through an outlet of the mixing manifold to an interior of a beverage capsule held in the capsule holder during use of the alcoholic beverage forming apparatus such that the alcoholic beverage mixture may mix with a flavour medium contained in the interior of the beverage capsule to form an alcoholic beverage that may be dispensed from the dispenser of the alcoholic beverage forming apparatus.

Souci et al. (Food Composition and Nutrition, 1 January 2015, MedPharm, 1151-1154) provides information about the nutritional compositions of alcohol free beer, nutrient beer and pilsener lager beer.

Briggs et al. (Brewing: Science and Practice, 1 January 2004, page 680) provides a table (Table 19.2) showing the analysed isohumulones concentrations of a number of British beers.

### SUMMARY OF THE INVENTION

The inventors have found that a reconstituted beer of superior quality can be produced by a device that is configured to combine (i) an essentially alcohol-free concentrate and (ii) an alcoholic liquid containing hop acids with water and carbon dioxide or, alternatively, with carbonated water. The use of a liquid concentrate as opposed to a dry or semi-dry concentrate offers the advantage that a clear, non-hazy reconstituted beer can be produced in no more than a few seconds. The use of an essentially alcohol-free concentrate offers the advantage that the stability of the concentrate is substantially improved as reactions between ethanol and components of the concentrate (e.g. acids) are avoided. In addition, precipitation of components that are poorly soluble in ethanol/water mixtures (e.g. proteins) is prevented.

The essentially alcohol-free liquid concentrate that is employed in accordance with the present invention additionally offers the advantage that, due to the virtual absence of ethanol, it has a relatively high surface tension. A high surface tension is advantageous as it reduces unwanted foaming during the filling of the beer concentrate into containers or reservoirs.

Precipitation of poorly water-soluble hop acids is prevented by dissolving these hop acids in the alcoholic liquid. Thus, the alcoholic liquid can suitably be combined with the liquid concentrate to produce a high quality reconstituted beer having the typical hop derived bitterness and floral, fruity flavour notes that are highly appreciated by the beer consumer.

Due to the partitioning of the ethanol and the hop acids, both the alcoholic liquid and the liquid beer concentrate are highly stable.

Thus, one embodiment of the present invention relates to a device for preparing and dispensing reconstituted beer, said device comprising:
- a first vessel containing a liquid concentrate for preparing a beer, said liquid concentrate having an ethanol content of 0-1 % ABV;
- a second vessel containing an alcoholic liquid, said alcoholic liquid containing 12-100 wt.% ethanol and 0-88 wt.% water, ethanol and water together constituting 80-100 wt.% of the alcoholic liquid; and further containing 50-2,000 mg/L of hop acids selected from iso-alpha acids, hydrogenated iso-alpha acids, hulupones and combinations thereof;
- a source of water;
- a source of pressurized carbon dioxide;
- a reconstitution unit;
- a dispensing unit for dispensing the alcoholic beer;
wherein the device is operable (i) to form a reconstituted beer comprising water from the source of water, carbon dioxide from the source of pressurized carbon dioxide, liquid concentrate from the first vessel and alcoholic liquid from the second vessel, in the reconstitution unit and (ii) to dispense the reconstituted beer from the dispensing unit.

The first and second vessel of the present device may be provided as integral components of the device or they may be provided in the form of removable containers. In one embodiment of the invention the first and second vessel are part of a single serve capsule comprising the first and second vessel in the form of separate compartments.

Another aspect of the invention relates to a device as described herein before, except that instead of a source of water and a source of pressurised carbon dioxide the device comprises a source of carbonated water and that the device is operable to form a reconstituted beer comprising carbonated water from the source of carbonated water, liquid concentrate from the first vessel and alcoholic liquid from the second vessel, in the reconstitution unit.

The invention also relates to a method of preparing and dispensing a reconstituted beer using the aforementioned devices.

### FIGURES

Fig.1 shows a representation of a device for preparing reconstituted beer in which liquid concentrate and alcoholic liquid are provided by a single serve capsule.
Fig.2 shows a representation of a device for preparing reconstituted beer in which liquid concentrate and alcoholic liquid are provided by refillable reservoirs.

### DETAILED DESCRIPTION OF THE INVENTION

Thus, one aspect of the present invention relates to a device for preparing and dispensing reconstituted beer, said device comprising:
- a first vessel containing a liquid concentrate for preparing a beer, said liquid concentrate having an ethanol content of 0-1 % ABV;
- a second vessel containing an alcoholic liquid, said alcoholic liquid containing 12-100 wt.% ethanol and 0-88 wt.% water, ethanol and water together constituting 80-100 wt.% of the alcoholic liquid; and further containing 50-2,000 mg/L of hop acids selected from iso-alpha acids, hydrogenated iso-alpha acids, hulupones and combinations thereof;
- a source of water;
- a source of pressurized carbon dioxide;
- a reconstitution unit;
- a dispensing unit for dispensing the alcoholic beer;
wherein the device is operable (i) to form a reconstituted beer comprising water from the source of water, carbon dioxide from the source of pressurized carbon dioxide, liquid concentrate from the first vessel and alcoholic liquid from the second vessel, in the reconstitution unit and (ii) to dispense the reconstituted beer from the dispensing unit.

The term "beer" as used herein refers to a yeast fermented malt beverage that has optionally been hopped. Beer is commonly produced by a process that comprises the following basic steps:
- mashing a mixture comprising malted barley, optionally supplementary grains and water to produce a mash;
- separating the mash in wort and spent grains;
- boiling the wort to produce a boiled wort;
- fermenting the boiled wort with live yeast to produce a fermented wort;
- subjecting the fermented wort to one or more further process steps (e.g. maturation and filtration) to produce beer; and
- packaging the beer in a sealed container, e.g. a bottle, can or keg.

Hop or hop extract is usually added during wort boiling to impart bitterness and floral, fruity flavor notes to the final beer.

The term "beer concentrate" as used herein refers to beer from which water has been removed, e.g. by means of nanofiltration, reverse osmosis, forward osmosis and/or freeze concentration.

The term "single-serve" as used herein is a synonym of "monoportion" or "unit dose" and refers to a capsule comprising sufficient amounts of beer concentrate and alcoholic liquid to prepare one serving of reconstituted beer. Typically, one serving of reconstituted beer is in the range of 120 ml to 1000 ml.

The term "free amino nitrogen" as used herein refers to the combined concentration of individual amino acids and small peptides as determined by EBC method 9.10.1 - Free Amino Nitrogen in Beer by Spectrophotometry (IM).

Concentrations of acids as mentioned herein, unless indicated otherwise, also include dissolved salts of these acids as well as dissociated forms of these same acids and salts.

The term "iso-alpha acids" as used herein refers to substances selected from the group of isohumulone, isoadhumulone, isocohumulone, pre-isohumulone, post-isohumulone and combinations thereof. The term "iso-alpha acids" encompasses different stereo-isomers (cis-iso-alpha acids and trans-iso-alpha acids). Iso-alpha acids are typically produced in beer from the addition of hops to the boiling wort. They may also be introduced into the beer in the form of pre-isomerised hop extract. Iso-alpha-acids are intensely bitter with an estimated threshold value in water of approximately 6 ppm.

The term "hydrogenated iso-alpha acids" refers to substances selected from dihydro-iso-alpha acids, tetrahydro-isoalpha acids, hexahydro-iso-alpha acids and combinations thereof.

The term "hulupones" as used herein refers to substances selected from cohulupone, n-hulupone, adhulupone and combinations thereof. Hulupones are oxidation products of hop beta-acids.

In one particularly preferred embodiment, the device according to the first aspect of the invention is operable to form a reconstituted beer in the reconstitution unit by mixing water from the source of water, carbon dioxide from the source of pressurized carbon dioxide, liquid concentrate from the first vessel and alcoholic liquid from the second vessel in the reconstitution unit. Preferably, the first and second vessel are in fluid communication with and located downstream of the source of water; and the reconstitution unit is in fluid communication with and located downstream of the first vessel, the second vessel and the source of pressurized carbon dioxide.

In another equally preferred embodiment, the device according to the first aspect of the invention further comprises a carbonation unit and the device is operable (i) to mix water from the source of water and carbon dioxide from the source of pressurized carbon dioxide in the carbonation unit to form carbonated water, and (ii) to mix the carbonated water with liquid concentrate from the first vessel and alcoholic liquid from the second vessel in the reconstitution unit to produce the reconstituted beer. Preferably, the carbonation unit is in fluid communication with and located downstream of the source of water and the source of pressurized carbon dioxide; the first vessel and the second vessel are in fluid communication with and located downstream of the carbonation unit; and the reconstitution unit is in fluid communication with and located downstream of the first vessel, the second vessel.

According to another embodiment, the device according the first aspect of the invention further comprises (i) a carbonation unit and (ii) a premix unit and the device is operable to prepare the reconstituted beer by:
mixing water from the source of water with carbon dioxide from the source of pressurized carbon dioxide in the carbonation unit to produce carbonated water; and
a. mixing the carbonated water with alcoholic liquid from the second vessel in the premix unit to produce carbonated alcoholic liquid; and mixing the carbonated alcoholic liquid with liquid concentrate from the first vessel in the reconstitution unit; or
b. mixing the carbonated water with liquid concentrate from the first vessel in the premix unit to produce non-alcoholic beer; and mixing the carbonated non-alcoholic beer with alcoholic liquid from the first vessel in the reconstitution unit;

According to another embodiment, the device according the first aspect of the invention further comprises (i) a premix unit and (ii) a carbonation unit and the device is operable to prepare the reconstituted beer by:
a. mixing water from the source of water with liquid from the first vessel in the premix unit to produce dilute concentrate; mixing the dilute concentrate with carbon dioxide from the source of pressurized carbon dioxide in the carbonation unit to produce non-alcoholic beer; and mixing the non-alcoholic beer with alcoholic beer from the second vessel in the reconstitution unit; or
b. mixing water from the source of water with alcoholic liquid from the second vessel in the premix unit to produce alcoholic water; mixing the alcoholic water with carbon dioxide from the source of pressurized carbon dioxide in the carbonation unit to produce carbonated alcoholic liquid; and mixing the carbonated alcoholic liquid with liquid concentrate from the first vessel in the reconstitution unit;

According to another embodiment, the device according the first aspect of the invention further comprises (i) a first premix unit and (ii) a second unit and the device is operable to prepare the reconstituted beer by:
a. mixing water from the source of water with liquid concentrate from the first vessel in the first premix unit to produce dilute concentrate; mixing the dilute concentrate with alcoholic liquid from the second vessel in the second premix unit to produce non-carbonated alcoholic beer; and mixing the non-carbonated alcoholic beer with carbon dioxide from the source of pressurized carbon dioxide in the reconstitution unit; or
b. mixing water from the source of water with alcoholic liquid from the second vessel in the first premix unit to produce alcoholic water; mixing the alcoholic water with liquid concentrate from the first vessel in the second premix unit to produce non-carbonated alcoholic beer; and mixing the non-carbonated alcoholic beer with carbon dioxide from the source of pressurized carbon dioxide in the reconstitution unit.

The source of water of the present device can be a reservoir or a water tap. The reservoir typically has an internal volume of 180-2,000 mL.

The source of pressurised carbon dioxide preferably is a pressurised container having an internal volume of 50-1,000 mL, more preferably an internal volume of 100-600 mL.

The present device preferably comprises a carbonation unit that is configured to mix carbon dioxide from the source of pressurised carbon dioxide under pressure with liquid to produce carbonated liquid containing 3-9 g/L, more preferably 3.5-7 g/L dissolved carbon dioxide, most preferably 4-6 g/L dissolved carbon dioxide. More preferably the carbonation unit is configured to mix carbon dioxide with aqueous liquid in the form of water or a mixture of water and liquid concentrate.

The carbonation unit is preferably configured to mix carbon dioxide and liquid at a pressure of at least 2.5 bar, more preferably of 3 to 10 bar, most preferably of 3.5 to 8 bar.

In a preferred embodiment, the carbonation unit is in fluid communication with (i) the source of pressurised carbon dioxide and (ii) the source of water.

A second aspect of the invention relates to a device for preparing and dispensing reconstituted beer, said device comprising:
- a first vessel containing a liquid concentrate for preparing a beer, said liquid concentrate having an ethanol content of 0-1 % ABV;
- a second vessel containing an alcoholic liquid, said alcoholic liquid containing 12-100 wt.% ethanol and 0-88 wt.% water, ethanol and water together constituting 80-100 wt.% of the alcoholic liquid; and further containing 50-2,000 mg/L of hop acids selected from iso-alpha acids, hydrogenated iso-alpha acids, hulupones and combinations thereof;;
- a source of carbonated water;
- a reconstitution unit;
- a dispensing unit for dispensing the alcoholic beer;
wherein the device is operable (i) to form a reconstituted beer comprising carbonated water from the source of carbonated water, liquid concentrate from the first vessel and alcoholic liquid from the second vessel, in the reconstitution unit and (ii) to dispense the reconstituted beer from the dispensing unit.

The device according to the second embodiment is preferably operable to prepare the reconstituted beer by:
a. mixing the carbonated water with alcoholic liquid from the second vessel to produce an carbonated alcoholic liquid; and mixing the carbonated alcoholic liquid with the liquid concentrate from the first vessel in the reconstitution unit; or
b. mixing the carbonated water with liquid concentrate from the first vessel to produce a carbonated non-alcoholic beer; and mixing the carbonated non-alcoholic beer with the alcoholic liquid from the second vessel in the reconstitution unit.

More preferably, the device according to the second embodiment is operable to prepare the reconstituted beer by: mixing the carbonated water with alcoholic liquid from the second vessel to produce an carbonated alcoholic liquid; and mixing the carbonated alcoholic liquid with the liquid concentrate from the first vessel.

The source of carbonated water in the device of the second embodiment preferably is a closed reservoir, more preferably a closed reservoir having an internal volume of 400-2,000 mL.

The devices of the present invention preferably contain a power supply and control system operable to activate the device and control functions of the device.

According to a particularly preferred embodiment, the present devices are adapted to the portion-wise preparation of reconstituted beer. More preferably, the device is adapted to prepare reconstituted beer in portions of 150-1,000 mL, more preferably of 180-500 mL.

The present devices preferably comprise a reconstitution unit that is configured to mix two or more liquids to produce the reconstituted beer. In a preferred embodiment, the reconstitution unit is configured to mix carbonated liquid with liquid concentrate from the first vessel and/or alcoholic liquid from the second vessel.

According to a particularly preferred embodiment, the reconstitution unit comprises a static mixer.

The dispensing unit of the present devices preferably is in fluid communication with the reconstitution unit.

According to a particularly preferred embodiment, the dispensing unit is located downstream of the reconstitution unit which is located downstream of the carbonation unit or the source of carbonated water.

The first vessel preferably is a single serve capsule, a compartment of a single serve multi-compartment capsule or a refillable reservoir. More preferably, the first vessel is a single serve capsule or a compartment of a single serve multi-compartment capsule. Most preferably, the first vessel is a compartment of a single serve capsule that comprises two compartments and in which the other compartment contains the alcoholic liquid.

The first vessel in the form of a reservoir preferably has an internal volume of 100-1,500 mL, more preferably of 200-1,000 mL.

The single serve capsule containing the liquid concentrate or the compartment of the single serve capsule containing the liquid concentrate preferably has an internal volume of 10-70 mL, more preferably 15-55 mL, most preferably 20-45 mL. The single serve capsule or the compartment of the single serve capsule preferably contains 10-65 mL, more preferably 15-50 mL, most preferably 20-40 mL of liquid concentrate.

The second vessel preferably is a is a single serve capsule, a compartment of a single serve mutli-compartment capsule or a refillable reservoir. More preferably, the second vessel is a single serve capsule or a compartment of a single serve mutli-compartment capsule. Most preferably, the second vessel is a compartment of a single serve capsule that comprises two compartments and in which the other compartment contains the liquid concentrate.

In a preferred embodiment, the present device comprise a carbonation unit that is in fluid communication with and located downstream of the source of water and the source of pressurized carbon dioxide; the first vessel and the second vessel are in fluid communication with and located downstream of the carbonation unit; and the reconstitution unit is in fluid communication with and located downstream of the first vessel and the second vessel. This embodiment is particularly advantageous in case the first and second vessel are single serve capsules or compartments of a single serve capsule as the carbonated water is used to wash the contents of the first and second vessel into the reconstitution unit where the four components are mixed to produce the reconstituted beer.

In another preferred embodiment, the first and second vessel are in fluid communication with and located downstream of the source of water; and the reconstitution unit is in fluid communication with and located downstream of the first vessel, the second vessel and the source of pressurized carbon dioxide. Also this embodiment is particularly advantageous in case the first and second vessel are single serve capsules or compartments of a single serve capsule as the water is used to wash the contents of the first and second vessel into the reconstitution unit where these three components are mixed with carbon dioxide from the source of pressurized carbon dioxide to produce the reconstituted beer.

The second vessel in the form of a reservoir preferably has an internal volume of 50-1,200 mL, more preferably of 100-800 mL.

The single serve capsule containing the alcoholic liquid or the compartment of the single serve capsule containing the alcoholic liquid preferably has an internal volume of 4-30 mL, more preferably 6-25 mL, most preferably 7-20 mL. The single serve capsule or the compartment of the single serve capsule preferably contains 4-25 mL, more preferably 6-20 mL, most preferably 7-15 mL of alcoholic liquid.

In a particularly preferred embodiment, the first vessel and the second vessel are the first and second compartment of a single serve capsule that comprises two compartments. The combined internal volume of the first compartment and the second compartment preferably does not exceed 75 mL, more preferably it is in the range of 15-65 mL, most preferably in the range of 20-60 mL.

The devices of the present invention preferably are configured to open the single serve capsules containing the liquid concentrate and the alcoholic liquid, or to open the compartments of the multi-compartment single serve capsule that contain the liquid concentrate and the alcoholic liquid.

Preferably, the devices are adapted to open the single serve capsules or the compartments of the single serve capsules by piercing, tearing, or removal of a lid portion.

According to a particularly preferred embodiment, the present devices are configured to allow a glass having a height of 10 cm and a diameter of 6 cm to be placed underneath the dispensing unit and to be filled from the dispensing unit with reconstituted beer.

The liquid concentrate and the alcoholic liquid are preferably contained in the first vessel and the second vessel in a weight ratio of 7:1 to 1:1, more preferably in a weight ratio of 6:1 to 1.2:1, most preferably in a weight ratio of 5:1 to 1.5:1.

According to a further preferred embodiment, the devices comprise a cooling unit that is adapted to cool water or carbonated water. Preferably, the cooling unit is located upstream of the reconstitution unit.

In a preferred embodiment of the invention the liquid concentrate in the first vessel is a liquid beer concentrate, more preferably a liquid beer concentrate that is obtained by removing water from an alcohol-free beer, more preferably from an alcohol-free beer having an ethanol content of less than 0.5 %ABV, especially of less than 0.2 %ABV and more particularly of less than 0.1 %ABV.

The liquid beer concentrate is preferably obtained by concentrating alcohol-free beer by means of membrane separation and/or freeze concentration. Examples of membrane separation techniques that can be employed to produce the liquid concentrate are reverse osmosis, nanofiltration and forward osmosis. Most preferably, the liquid concentrate is obtained by reverse osmosis or freeze concentration of alcohol-free beer.

In another embodiment, the liquid concentrate is prepared by mixing together different ingredients such as water, bittering agent, foaming agent and colouring.

The ethanol content of the liquid concentrate preferably does not exceed 0.5% ABV, more preferably it does not exceed 0.3% ABV, most preferably it does not exceed 0.1% ABV.

The pH of the liquid concentrate is preferably in the range of 3.0 to 6.0, more preferably in the range of 3.2 to 5.5 and most preferably in the range of 3.5 to 5.0.

The liquid concentrate preferably has a water content in the range of 35-80 wt.%, more preferably in the range of 40-75 wt.% and most preferably in the range of 45-70 wt.%.

In a preferred embodiment, the liquid concentrate has a density of 20 to 60 °P, more preferably a density of 24 to 50 °P, and most preferably a density of 28 to 42 °P.

Riboflavin, free fatty acids (e.g. linoleic acid), amino acids and small peptides are substances that are naturally present in malted barley and that typically occur in significant concentrations in alcohol-free beer. Likewise, maltotetraose is found in significant concentrations in alcohol-free beer as this oligosaccharide is formed by enzymatic hydrolysis of starch during mashing and is not digested by yeast. Due to the fact that the liquid concentrate is obtained from alcohol-free beer using a concentration method that only removes water, or only water and low molecular weight substances and ions, the liquid concentrate typically contains appreciable levels of riboflavin, linoleic acid, amino acids, peptides and/or maltotetraose.

The riboflavin content of the liquid concentrate is preferably in the range of 250-3,000 µg/L more preferably 300-2,500 µg/L, more preferably 350-2,200 µg/L and most preferably 400-2,000 µg/L.

The liquid concentrate preferably contain 150-5,000 µg/L, more preferably 200-4,000 µg/L, even more preferably 250-3,500 µg/L and most preferably 300-3,000 µg/L of linoleic acid.

Besides linoleic acid, the liquid concentrate typically also contains other fatty acids, such as oleic acid and/or alpha-linolenic acids. Oleic acid is preferably present in the liquid concentrate in a concentration of 300-3,000 µg/L, more preferably 400-2,500 µg/L, even more preferably 500-2,000 µg/L and most preferably 600-1,800 µg/L.

Alpha-linolenic acid is preferably present in the liquid concentrate in a concentration of 100-1,200 µg/L, more preferably 120-1,100 µg/L, even more preferably 150-1,000 µg/L and most preferably 180-900 µg/L.

The free amino nitrogen (FAN) content of the liquid concentrate is preferably in the range of 60-1,000 mg/L more preferably 80-800 mg/L, even more preferably 90-700 mg/L and most preferably 100-600 mg/L.

Unlike the malt sugars maltose and maltotriose, maltotetraose is not significant digested by most brewer's yeasts. Consequently, the concentration of maltotetraose is usually hardly affected by yeast fermentation. Accordingly, the liquid concentrate preferably contains 10-100 g/L, more preferably 12-80 g/L, even more preferably 15-60 and most preferably 18-40 g/L of maltotetraose.

The liquid beer concentrate that is employed in accordance with the present invention offers the advantage that it has a relatively high surface tension due to the virtual absence of ethanol. A high surface tension is advantageous as it reduces unwanted foaming during the filling of the beer concentrate into capsules. Preferably, the liquid beer concentrate has a surface tension of at least 42.5 mN/m, more preferably of 44-55 nM/m and most preferably of 45-53 mN/m.

In order to accurately measure the surface tension about 300 mL of concentrate is transferred to an open container that is kept in a water bath set at 20.0°C until the sample is fully degassed. release initial gas. Next, the sample is carefully poured in a wide and large (500 mL) test beaker. In order to assure homogeneity, a plastic disposable stirrer id used to carefully stir the sample. A homogeneous sub-sample of 150 ml is introduced in a measuring cup. Surface tension is measured using a Krűss 9 tensiometer, equipped with Wilhelmy plate. The instrument protocol is followed, starting with a calibration (pure water = 72,6 mN/m) followed by measuring the surface tension of the samples. In between measurements the probe/plate is carefully cleaned and shortly held (with pincers) in the hot flame of the Bunsen-burner, making sure no residual sample on the probe affects the result of the next measurement.

In one embodiment of the present invention the liquid concentrate is a concentrate of an alcohol-free beer that has been produced by dealcoholisation of an alcoholic beer. The liquid concentrate according this embodiment typically contains only a limited amount of maltose and/or maltotriose.

Preferably, the liquid concentrate of de-alcoholised beer contains maltose in a concentration of 0-20 g/L, more preferably of 0-15 g/L, even more preferably of 0.5-10 g/L and most preferably of 1-8 g/L.

The liquid concentrate of de-alcoholised beer preferably contains maltotriose in a concentration of 1-30 g/L, more preferably of 2-25 g/L, even more preferably of 2.5-22 g/L and most preferably of 3-20 g/L.

In another embodiment of the present invention the liquid concentrate is a concentrate of an alcohol-free beer that has been produced using a fermentation method that produces virtually no ethanol. The liquid concentrate according this embodiment typically contains relatively high levels of maltose and/or maltotriose.

The liquid concentrate according to this embodiment preferably contains maltose in a concentration of 80-400 g/L, more preferably of 100-300 g/L, even more preferably of 140-280 g/L and most preferably of 150-250 g/L.

The liquid concentrate obtained from alcohol-free that has been produced using an ethanol restricted fermentation preferably contains maltotriose in a concentration of 30-150 g/L, more preferably of 40-120 g/L, even more preferably of 45-110 g/L and most preferably of 50-100 g/L.

According to a particularly preferred embodiment, the liquid concentrate is produced by a concentration method that largely retains the acetic acid that is naturally present in beer. Due to the very low ethanol content of the liquid concentrate, the presence of acetic acid in the concentrate does not lead to flavour instability as a result of the formation of ethyl acetate.

Preferably, the liquid concentrate contains, 100-1,200 mg/L acetic acid, more preferably 120-1,000 mg/L acetic acid, even more preferably 150-900 mg/L acetic acid and most preferably 180-800 mg/L acetic acid.

In a preferred embodiment, the liquid concentrate is obtained by means of membrane separation using a membrane with a magnesium sulphate rejection of 80-100%, more preferably 90-100% and most preferably 95-100% when measurement is carried out using 2,000 mg/L aqueous magnesium sulphate solution at 0.48 MPa, 25°C and 15% recovery.

In a preferred embodiment, the liquid concentrate is obtained by means of membrane separation using a membrane with a glucose rejection of 80-100%, more preferably 90-100% and most preferably 95-100% when measurement is carried out using 2,000 mg/L aqueous glucose solution at 1.6 MPa, 25°C and 15% recovery.

According to a particularly preferred embodiment, the liquid concentrate is obtained by means of reverse osmosis or forward osmosis using a membrane with a sodium chloride rejection of 80-100%, more preferably 90-100% and most preferably 95-100% when measurement is carried out using 2000 mg/L sodium chloride solution at 10.3 bar, 25°C, pH 8 and 15% recovery.

The concentrations of volatile flavour substances and malt sugars in the liquid concentrate that is produced by membrane separation and/or freeze concentration of alcohol-free beer is dependent on the type of alcohol-free beer from which the concentrate has been produced. As will be explained in more detail below, alcohol-free beer can suitably be produced by two different types of processes:
- by removing ethanol from an alcoholic beer (e.g. by means of vacuum distillation);
- by restricting formation of ethanol during yeast fermentation.

In one embodiment of the present invention, wherein the liquid concentrate is obtained by concentrating an alcohol-free beer that is obtained by de-alcoholisation of alcoholic beer, the concentrate comprises:
- 100-1,200 mg/L of acetic acid;
- 0-20 g/L of maltose;
- 1-30 g/L of maltotriose.

In another embodiment of the present invention, wherein the liquid concentrate is obtained by yeast fermentation with restriction of ethanol formation, the concentrate comprises:
- 0-300 mg/L of acetic acid;
- 80-400 g/L of maltose;
- 30-150 g/L of maltotriose.

The liquid concentrate preferably contains 0-500 mg/L, more preferably 0-200 mg/L and most preferably 0-100 mg/L dissolved carbon dioxide.

In a preferred embodiment, the alcoholic liquid contains 13-90 wt.% ethanol and 10-87 wt.% water, more preferably the alcoholic liquid contains 25-85 wt.% ethanol and 15-75 wt.% water, more preferably the alcoholic liquid contains 40-82 wt.% ethanol and 18-60 wt.% water.

Preferably, water and ethanol together constitute 85-100 wt.%, more preferably 90-100 wt.% and most preferably 95-100 wt.% of the alcoholic liquid.

Iso-alpha acids, as well as hydrogenated alpha acids and oxidised alpha-acids (hulupones) contribute to the pleasant bitterness of beers that is appreciated by consumers. Accordingly, in a very preferred embodiment, the liquid concentrate and/or the alcoholic liquid contains iso-alpha acids, hydrogenated iso-alpha acids and/or hulupones. In view of the poor water-solubility of hop acids in the liquid concentrate, it is preferred that the liquid concentrate contains 0-100 mg/L, preferably 0-30 mg/L, more preferably 0-10 mg/L hop acids selected from iso-alpha acids, hydrogenated alpha-acids, hulupones and combinations thereof.

Since solubility of the hop acids in ethanol and ethanol/water mixtures is much higher than solubility of these hop acids in the liquid concentrate, it is preferred that at least a part of the hop acids present in the alcoholic liquid. Accordingly, in a preferred embodiment, the alcoholic liquid comprises 100-1,500 mg/L, most preferably 200-1,000 mg/L hop acids selected from iso-alpha acids, hydrogenated alpha-acids, hulupones and combinations thereof.

According to a particularly preferred embodiment, the alcoholic liquid in the second vessels comprises ethanol that is obtained from de-alcoholisation of alcoholic beer. Vacuum distillation is commonly used to remove alcohol from beer. The distillate so obtained contains ethanol, water as well as a range of volatile beer flavour substances. Such distillates may advantageously be applied in the alcoholic liquid of the present capsule, especially if the liquid concentrate was produced from de-alcoholised beer. The term "vacuum distillation" as used herein also encompasses "vacuum evaporation".

Accordingly, in a preferred embodiment, the alcoholic liquid comprises a distillate obtained by distillative de-alcoholisation of an alcohol-containing beer. Most preferably, the alcoholic liquid consists of such a distillate or is an aqueous dilution of such a distillate.

Preferably, the alcoholic liquid comprises, per kg of ethanol, 50-2,000 mg, more preferably 70-1,500 mg, even more preferably 90-1,200 mg and most preferably 100-800 mg of ethyl acetate.

Preferably, the alcoholic liquid comprises, per kg of ethanol, 5-200 mg, more preferably 7-150 mg, even more preferably 9-120 mg and most preferably 10-80 mg of isoamyl acetate.

In a preferred embodiment the alcoholic liquid contains, per kg of ethanol, 400-5,000 mg, more preferably 600-4,000 mg, even more preferably 700-3,500 mg and most preferably 800-3,00 mg of amyl alcohols. Here the term "amyl alcohols" refers to alcohols with the formula C₅H₁₂O.

In another preferred embodiment the alcoholic liquid contains, per kg of ethanol, 8-240 mg, more preferably 11-170 mg, even more preferably 13-140 mg and most preferably 15-100 mg of phenyethyl alcohol.

Preferably, the alcoholic liquid contains, per kg of ethanol, 2-50 mg, more preferably 3-40 mg, even more preferably 3.5-32 mg and most preferably 4-25 mg of phenyl ethyl acetate.

Another aspect of the invention relates to a method of preparing and dispensing a reconstituted beer using a device according containing a carbonation unit as described herein before, said method comprising:
mixing water from the source of water, carbon dioxide from the source of pressurized carbon dioxide, liquid concentrate from the first vessel and alcoholic liquid from the second vessel in the reconstitution unit to form a reconstituted beer; and
dispensing the reconstituted beer from the dispensing unit.

Yet another aspect of the invention relates to a method of preparing and dispensing a reconstituted beer using a device containing a source of carbonated water as described herein before, said method comprising:
mixing carbonated water from the source of carbonated water, liquid concentrate from the first vessel and alcoholic liquid from the second vessel in the reconstitution unit to form a reconstituted beer; and
dispensing the reconstituted beer from the dispensing unit.

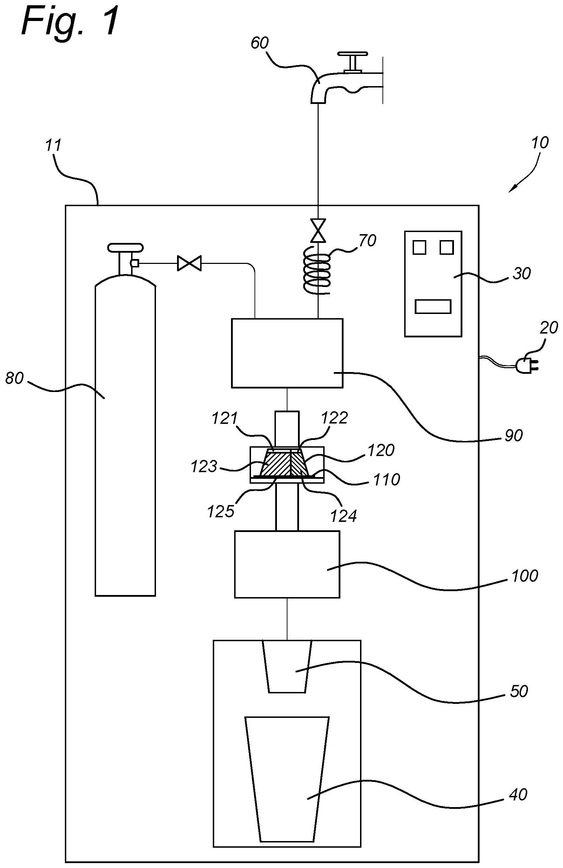

Figure 1 shows a representation of a device (10) for preparing a reconstituted beer. The device includes a housing (11) which houses the mechanical and electronic components of the device (10). The housing (11) can be formed of plastic and/or metal.

The device (10) comprises a power supply (20) and a control system (30) operable to activate the device and control functions of the device (e.g. the volume, temperature and/or alcohol content of the dispensed reconstituted beer). Also shown is an empty glass (40) that is positioned underneath the dispensing unit (50).

The device (10) also includes a source of water in the form of a water tap (60) and a cooling unit (70). The device (10) further comprises a cylinder (80) containing pressurised carbon dioxide, a carbonation unit (90), a reconstitution unit (100) and a receptacle (110) for receiving a two-compartment single serve capsule (120).

The single serve capsule (120) comprises a first compartment (121) containing a liquid beer concentrate (123) and a second compartment (122) containing an alcoholic liquid (124). The compartments (121, 122) are sealed by a membrane (125).

The device (10) comprises means for opening both the top end and bottom end of the first and second compartments (121,122) of the single serve capsule (120).

In use, a consumer can place the single serve capsule (120) in the receptacle (110) of the device (10). Next, the consumer can activate the device (10) using the control system (30) and await dispensing of the reconstituted beer from the dispensing unit (50) into the glass (40).

Upon activation of the device (10) water from the tap (60) and pressurized carbon dioxide from the cylinder (80) are dispensed to the carbonation unit (90). During its passage to the carbonation unit (90) the water is cooled by the cooling unit (70). Once the adequate amounts of water and carbon dioxide have been mixed in the carbonation unit (90), the carbonated water is released from the carbonation unit (90) and flows through the single serve capsule (120) to the reconstitution unit (100). The stream of carbonated water from the carbonation unit (90) follows two different flow paths, one flow path passes through the first compartment (121) of the single serve capsule (120) while the other flow path passes through the second compartment (123) of the single serve capsule (120).

While passing through the single serve capsule (120), the carbonated water washes out the liquid beer concentrate (123) and the alcoholic liquid (124) into the reconstitution unit (100). In the reconstitution unit (100) the carbonated water, the washed out liquid beer concentrate and the washed out alcoholic liquid are intimately mixed to produce a clear reconstituted beer.

Next the clear reconstituted beer is released from the reconstitution unit (100) through the dispensing unit (50) into glass (40) under the formation of a foam head.

It will be understood that in the device of Figure 1 the single serve capsule (120) may be replaced by two separate capsules, one containing the liquid beer concentrate, the other containing the alcoholic liquid.

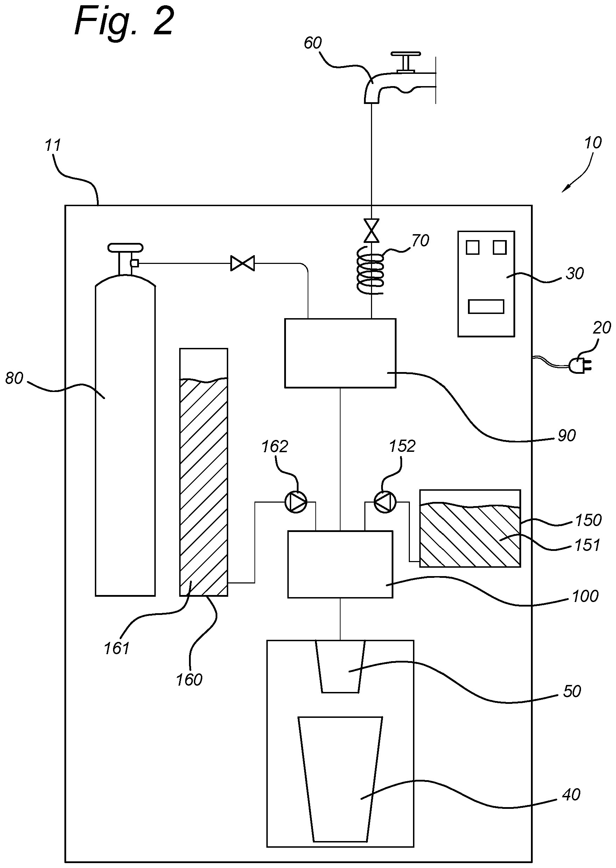

Figure 2 shows a representation of an alternative device (10) for preparing a reconstituted beer which is similar to the device shown in Figure 1, except that instead of a receptacle for receiving a two-compartment single serve capsule, the device (10) comprises a first refillable reservoir (150) containing liquid beer concentrate (151) and a second refillable reservoir (160) containing alcoholic liquid (162). In addition, the device (10) comprises a first metering unit (152) and a second metering unit (162).

In use, a consumer can activate the device (10) using the control system (30) and await dispensing of the reconstituted beer from the dispensing unit (50) into the glass (40).

Upon activation of the device (10) water from the tap (60) and pressurized carbon dioxide from the cylinder (80) are dispensed to the carbonation unit (90). During its passage to the carbonation unit (90) the water is cooled by the cooling unit (70). Once the adequate amounts of water and carbon dioxide have been mixed in the carbonation unit (90), the carbonated is released from the carbonation unit (90) and flows through the single serve capsule (120) to the reconstitution unit (100). The metering units (152) and (162) discharge metered amounts of liquid beer concentrate (151) and alcoholic liquid (161) into the reconstitution unit (100)

In the reconstitution unit (100) the carbonated water, the metered amounts of liquid beer concentrate and alcoholic liquid are intimately mixed to produce a clear reconstituted beer.

Next the clear reconstituted beer is released from the reconstitution unit (100) through the dispensing unit (50) into glass (40) under the formation of a foam head.

The invention is further illustrated by the following non-limiting examples.

### EXAMPLES

### Example 1

A non-hopped lager (containing 5% ABV was de-alcoholised by vacuum distillation (Schmidt-Bretten, Bretten, Germany - feed: 5 hL/hr; steam mass flow rate: 100 kg/h; outlet pressure: 3.5 bar; vacuum setting: 90 mbar; outlet temperature: 3°C). The resulting de-alcoholised beer had an ethanol content of 0.01% ABV.

Distillate produced during de-alcoholisation was recovered and analysed. The results are shown in Table 1.

**Table 1**

| Ethanol | 60 wt.% |
|---|---|
| Ethyl acetate | 50.2 mg/L |
| Isoamyl acetate | 4.56 mg/L |
| Amyl alcohols | 206 mg/L |
| Phenylethyl alcohol | 5.09mg/L |
| Phenyl ethyl acetate | 2.77 mg/L |

The dealcoholized non-hopped lager was concentrated by means of nanofiltration using the following set-up:

### Nanofiltration membrane

| | |
|---|---|
| **Type** | Configuration: Spiral wound |
| | Membrane polymer: Composite polyamide |
| | Brine spacer material: Polypropylene |
| **Specifications** | Permeate Flow: |
| | • MgSO₄: 7.6 m³/d |
| | • NaCl: 9.5 m³/d |
| | Stabilised salt rejection¹: |
| | • MgSO₄: >97% (2000 ppm, 4.8 bar, 25 °C, 15% recovery, pH 6.5) |
| | • NaCl: 89-95% (500 ppm, 4.8 bar, 25 °C, 15% recovery, pH 7.0) |
| | Nominal membrane area: 7.9 m² |

| | |
|---|---|
| ¹ Equates to a MW cut-off of appr. 200 Da | |

### Configuration

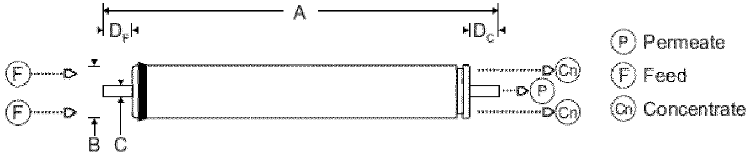

| | |
|---|---|
| A (total length) | = 1016 mm |
| B (ATD diameter) | = 100.3 mm |
| C (connection diameter) | = 19.1 mm |
| D_{F} (core tube extension - feed side) | = 26.7 mm |
| D_{C} (core tube extension - conc. side) | = 26.7 mm |

### Maximum operating limits

- Pressure: 80 bar
- Temperature: 28 °C
- Pressure drop: 0.7 bar
- Feed flow: 3.6 m³/h
- Chlorine concentration: <0.1 ppm
- Feed water SDI (15 min.) : 5.0
- Feed water turbidity: 1.0 NTU
- Feed water pH: 3.0-10.0
- Maximum ratio of concentrate to permeate flow for any element: 5:1

### Filtration run

Circulation of the beer was effected by a piston pump. This pump has a capacity of 1 m³/h and a maximum discharge pressure of 20-80 bar. The test-unit was limited to approximately 30 bar and was protected by means of an overpressure relief valve having a set-point of 40 bar.

Initial permeate production started at a pressure of around 15 bar (osmotic pressure).

In total 100 litres of beer were filtered, yielding 84.6 litres of permeate and 16.1 litres of liquid concentrate. Consequently, the concentration factor achieved was 100/15.4 = 6.5.

The composition of the beer concentrate so obtained is shown in Table 2.

**Table 2**

| | |
|---|---|
| Acetic acid | 310 mg/L |
| Riboflavin | 890 µg/L |
| Oleic acid | 1040 µg/L |
| Linoleic acid | 980 µg/L |
| Alpha-linolenic acid | 630 µg/L |
| Free amino nitrogen | 310 mg/L |
| Maltose | 1.1 g/L |
| Maltotriose | 7.0 g/L |
| Maltotetraose | 22 g/L |

The liquid beer concentrate had a surface tension of 46 mN/m.

### Comparative Example A

A commercial hopped lager beer having an alcohol content of 5.0% ABV and iso-alpha acids content of 19 mg/L was concentrated by means of nanofiltration using the same set-up as in Example 1.

Initial permeate production started at a pressure of around 4 bar (osmotic pressure). In total 200 litres of beer were filtered, yielding 172.3 litres of permeate and 27.7 litres of concentrate. Consequently, the concentration factor achieved was 200/27.7 = 7.2.

The hopped, alcoholic beer concentrate so obtained was cloudy, had an ethanol content of 4.71% ABV, a specific gravity of 1.8298 (20°P) and a surface tension of 39.7 mN/m. The concentrate contained 78.7 mg/L iso-alpha acids, meaning that 42.5% of the iso-alpha acids were lost during the nanofiltration step.

### Example 2

30 mL of the beer concentrate of Example 1 was combined with 170 mL of carbonated water having an ethanol content of 5.9% ABV to produce a reconstituted beer having a temperature of 5°C.

The reconstituted beer so obtained was clear (i.e. not hazy) and had the typical yellow colour of a lager, as well as satisfactory foam properties.

The evaluation of the reconstituted beer by an expert panel showed that this beer had a pleasant taste similar to that of ordinary lagers.

### Example 3

30 mL of the beer concentrate of Example 1 is combined with 170 mL of carbonated water having an ethanol content of 5.9% ABV to produce a reconstituted beer having a temperature of 5°C.This time the ethanol containing carbonated water is prepared by mixing 16.6 parts by weight of the alcoholic distillate of Example 1 with 153.3 parts by weight of carbonated water.

Again, the reconstituted beer so obtained is clear (i.e. not hazy) and has the typical yellow colour of a lager, as well as satisfactory foam properties.

The evaluation of the reconstituted beer by an expert panel shows that this beer had a pleasant taste that is preferred over the taste of the reconstituted beer of Example 2.

### Example 4

The liquid beer concentrate of Comparative Example A and the beer concentrate of Example 1 were standardised to a concentration factor of 6 (*i.e.* 6-fold more concentrated than the original non-hopped lager) by adding a diluent as shown in Table 3.

**Table 3**

| **Sample** | **Liquid beer concentrate** | **Diluant** |
|---|---|---|
| A | Comparative Example A | Demineralised water |
| B | Example 1 | Demineralised water |
| C | Example 1 | Demineralised water and ethanol to produce a concentrate containing 5% ABV ethanol |
| D | Example 1 | Demineralised water and pre-isomerised hop extract, to produce a concentrate containing 120 mg/L of iso-alpha acids |

Following preparation, the samples were kept at 0°C for 7 days. Next, the turbidity of the samples was measured at 0°C (in triplicate) at angles of scatter of 25° and 90°, using a Sigrist photometer. The average results are shown in Table 4, in EBC units.

**Table 4**

| **Sample** | **Turbidity** | |
|---|---|---|
| | **90°** | **25°** |
| A | >100 | >100 |
| B | 46.07 | 65.93 |
| C | 42.97 | 62.17 |
| D | 62.80 | 78.33 |

These results showed that the introduction of iso-alpha acids into the beer concentrate caused haze formation, probably as a result of precipitation of iso-alpha acids.

Aliquots of samples A, B, C and D are stored at 30°C and 40°C for 3 months during which period concentration levels of ethyl esters, turbidity and colour are monitored.

It is found that samples B and D are more stable than the other samples. Unlike samples B and D, samples A and C show significant formation of ethyl esters during the storage period.

### Example 5

A de-alcoholised non-hopped lager and an alcoholic distillate are produced in the same way as in Example 1.

The de-alcoholised non-hopped beer is concentrated by means of reverse osmosis using a reverse osmosis flat sheet filtration membrane made of thin film composite comprising a polyamide membrane layer on a polyester (PET) support material (RO90, ex Alfa Laval, operating pressure 5-25 bar). This membrane has a rejection of at least 90%, measured on 2000 ppm NaCl, at 9 bar and 25°C.

### Example 6

A single serve capsule according to the invention is prepared using a capsule comprising two compartments. One compartment (compartment A) has an internal volume of 20 mL, the other compartment (compartment B) has an internal volume of 35 mL.

The alcoholic distillate of Example 1 is mixed with a pre-isomerised hop extract to produce a solution containing 210 mg/L iso-alpha acids.

18 mL of the concentrated alcoholic liquid containing hop extract is introduced in compartment A of the capsule. Furthermore, 32 mL of the liquid beer concentrate of Example 1 is introduced in compartment B. After filling, the compartments are sealed with a flexible foil.

### Example 7

A dealcoholized non-hopped lager was concentrated by means of nanofiltration as described in Example 1. The beer concentrate so obtained (Concentrate A) was subjected to accelerated storage at 30°C and 40°C. The same storage tests were conducted with the same concentrate after ethanol had been added in a concentration of 5 wt.% (Concentrate B).

Before the storage test and after 3 months storage the concentration levels of a number of beer flavour substances were determined. The results of these analysis are shown in Table 5.

**Table 5**

| **Samples** | | **Microgram/L** | | | | | |
|---|---|---|---|---|---|---|---|
| | | Ethyl octanoate | Ethyl acetate | Ethyl propionate | Ethyl butanoate | Ethyl 3-methyl-butanoate | Ethyl phenyl-acetate |
| A | Fresh | 0 | 640 | 4.7 | 7.9 | 0.1 | 0.0 |
| | 30°C | 0 | 400 | 4.2 | 6.2 | 0.1 | 0.0 |
| | 40°C | 0 | 320 | 4.7 | 6.0 | 0.2 | 0.0 |
| B | Fresh | 0 | 720 | 20 | 52 | 1.2 | 0.0 |
| | 30°C | 4,600 | 2,040 | 74 | 163 | 9.7 | 0.2 |
| | 40°C | 4,320 | 4,040 | 152 | 230 | 25 | 0.5 |

### Example 8

A lager beer having an ethanol content of 5 vol.% was concentrated by means of nanofiltration as described in Comparative Example A. Accelerated storage tests were conducted with this concentrate (Concentrate A) at 30°C and 40°C.

Before the storage test and after 3 months the concentration levels of a number of beer flavour substances were determined. The results of these analyses are shown in Table 6.

**Table 6**

| **Samples** | **Microgram/L** | |
|---|---|---|
| | Ethyl 3-methylbutanoate | Ethyl phenylacetate |
| Fresh | 8.5 | 0.0 |
| 30°C | 23 | 0.2 |
| 40°C | 47 | 0.4 |

### Example 9

Two reconstituted beers were prepared by mixing 32 mL of beer concentrate, with 11.4 mL of alcoholic liquid and 205 mL of carbonated water (Royal Club^{™} soda water, the Netherlands).

The compositions of the beer concentrates and the alcoholic liquids used in the preparation of the reconstituted beers are shown in Table 7.

**Table 7**

| | **Reconstituted beer A** | **Reconstituted beer B** |
|---|---|---|
| Beer concentrate | Beer concentrate of Example 1 | Beer concentrate of Example 1, containing 6.56 mg iso-alpha acids per mL |
| Alcoholic liquid | Ethanol (95%), containing 18.42 mg iso-alpha acids per mL | Ethanol (95%), containing |

Reconstituted beer A was completely clear, had a nice foam head and a pleasant bitter taste. Reconstituted beer B contained some precipitate.

## Claims

1. A device for preparing and dispensing reconstituted beer, said device comprising:
• a first vessel containing a liquid concentrate for preparing a beer, said liquid concentrate having an ethanol content of 0-1 % ABV;
• a second vessel containing an alcoholic liquid, said alcoholic liquid containing 12-100 wt.% ethanol and 0-88 wt.% water, ethanol and water together constituting 80-100 wt.% of the alcoholic liquid; and further containing 50-2,000 mg/L of hop acids selected from iso-alpha acids, hydrogenated iso-alpha acids, hulupones and combinations thereof;
• a source of water;
• a source of pressurized carbon dioxide;
• a reconstitution unit;
• a dispensing unit for dispensing the alcoholic beer;
wherein the device is operable (i) to form a reconstituted beer comprising water from the source of water, carbon dioxide from the source of pressurized carbon dioxide, liquid concentrate from the first vessel and alcoholic liquid from the second vessel, in the reconstitution unit and (ii) to dispense the reconstituted beer from the dispensing unit.

2. Device according to claim 1, wherein the first and second vessel are in fluid communication with and located downstream of the source of water; wherein the reconstitution unit is in fluid communication with and located downstream of the first vessel, the second vessel and the source of pressurized carbon dioxide; and wherein the dispensing unit is in fluid communication with and located downstream of the reconstitution unit.

3. Device according to claim 1, wherein the device further comprises a carbonation unit that is in fluid communication with and located downstream of the source of water and the source of pressurized carbon dioxide; and wherein the first vessel and the second vessel are in fluid communication with and located downstream of the carbonation unit; and wherein the dispensing unit is in fluid communication with and located downstream of the reconstitution unit.

4. Device according to any one of the preceding claims, wherein both the first vessel and the second vessel are single serve capsules or wherein the first vessel and the second vessels are compartments of a single serve mutli-compartment capsule.

5. A device for preparing and dispensing reconstituted beer, said device comprising:
• a first vessel containing a liquid concentrate for preparing a beer, said liquid concentrate having an ethanol content of 0-1 % ABV;
• a second vessel containing an alcoholic liquid, said alcoholic liquid containing 12-100 wt.% ethanol and 0-88 wt.% water, ethanol and water together constituting 80-100 wt.% of the alcoholic liquid; and further containing 50-2,000 mg/L of hop acids selected from iso-alpha acids, hydrogenated iso-alpha acids, hulupones and combinations thereof;
• a source of carbonated water;
• a reconstitution unit;
• a dispensing unit for dispensing the alcoholic beer;
wherein the device is operable (i) to form a reconstituted beer comprising carbonated water from the source of carbonated water, liquid concentrate from the first vessel and alcoholic liquid from the second vessel, in the reconstitution unit and (ii) to dispense the reconstituted beer from the dispensing unit.

6. Device according to any one of the preceding claims, wherein the liquid concentrate has a free amino nitrogen (FAN) content in the range of 60-1,000 mg/L.

7. Device according to any one of the preceding claims, wherein the liquid concentrate contains 250-3,000 µg/L of riboflavin.

8. Device according to any one of the preceding claims, wherein the liquid concentrate contains 10-100 g/L of maltotetraose.

9. Device according to any one of the preceding claims, wherein the liquid concentrate contains 0-100 mg/L hop acids selected from iso-alpha acids, hydrogenated iso-alpha acids, hulupones and combinations thereof.

10. Device according to any one of the preceding claims, wherein the liquid concentrate is a liquid concentrate that is obtained by removing water from an alcohol-free beer.

11. Device according to claim 10, wherein the liquid concentrate is obtained by removing water from an alcohol-free beer by means of membrane separation and/or freeze concentration, wherein the membrane separation is selected from nanofiltration, reverse osmosis and forward osmosis.

12. Device according to any one of the preceding claims, wherein the alcoholic liquid comprises a distillate obtained by distillative de-alcoholisation of an alcohol-containing beer.

13. Device according to any one of the preceding claims, wherein the alcoholic liquid contains 100-1,500 mg/L of hop acids selected from iso-alpha acids, hydrogenated iso-alpha acids, hulupones and combinations thereof.

14. A method of preparing and dispensing a reconstituted beer using a device according to claim 1, said method comprising:
mixing water from the source of water, carbon dioxide from the source of pressurized carbon dioxide, liquid concentrate from the first vessel and alcoholic liquid from the second vessel in the reconstitution unit to form a reconstituted beer; and
dispensing the reconstituted beer from the dispensing unit.

15. A method of preparing and dispensing a reconstituted beer using a device according to claim 5, said method comprising:
mixing carbonated water from the source of carbonated water, liquid concentrate from the first vessel and alcoholic liquid from the second vessel in the reconstitution unit to form a reconstituted beer; and
dispensing the reconstituted beer from the dispensing unit.

## Patentansprüche

1. Vorrichtung zum Zubereiten und Ausgeben von rekonstituiertem Bier, wobei die Vorrichtung umfasst:
• ein erstes Gefäß, das ein flüssiges Konzentrat zum Zubereiten eines Biers enthält, wobei das flüssige Konzentrat einen Ethanolgehalt von 0-1% ABV aufweist;
• ein zweites Gefäß, das eine alkoholische Flüssigkeit enthält, wobei die alkoholische Flüssigkeit 12-100 Gew.-% Ethanol und 0-88 Gew.-% Wasser enthält, Ethanol und Wasser zusammen 80-100 Gew.-% der alkoholischen Flüssigkeit ausmachen; und die alkoholische Flüssigkeit ferner 50-2.000 mg/l Hopfensäuren enthält, die aus Iso-alpha-Säuren, hydrierten Iso-alpha-Säuren, Huluponen und Kombinationen davon ausgewählt sind;
• eine Wasserquelle;
• eine Quelle von unter Druck stehendem Kohlendioxid;
• eine Rekonstitutionseinheit;
• eine Ausgabeeinheit zum Ausgeben des alkoholischen Biers;
wobei die Vorrichtung bedienbar ist, um (i) in der Rekonstitutionseinheit ein rekonstituiertes Bier zu erzeugen, das Wasser aus der Wasserquelle, Kohlendioxid aus der Quelle von unter Druck stehendem Kohlendioxid, flüssiges Konzentrat aus dem ersten Gefäß und alkoholische Flüssigkeit aus dem zweiten Gefäß umfasst, und um (ii) das rekonstituierte Bier von der Ausgabeeinheit auszugeben.

2. Vorrichtung nach Anspruch 1, wobei das erste und das zweite Gefäß in Fluidverbindung mit der Wasserquelle stehen und sich stromabwärts davon befinden; wobei die Rekonstitutionseinheit in Fluidverbindung mit dem ersten Gefäß, dem zweiten Gefäß und der Quelle von unter Druck stehendem Kohlendioxid steht und sich stromabwärts davon befindet; und wobei die Ausgabeeinheit in Fluidverbindung mit der Rekonstitutionseinheit steht und sich stromabwärts davon befindet.

3. Vorrichtung nach Anspruch 1, wobei die Vorrichtung ferner eine Karbonisierungseinheit umfasst, die in Fluidverbindung mit der Waserquelle und der Quelle von unter Druck stehendem Kohlendioxid steht und sich stromabwärts davon befindet; und wobei das erste Gefäß und das zweite Gefäß in Fluidverbindung mit der Karbonisierungseinheit stehen und sich stromabwärts davon befinden; und wobei die Ausgabeeinheit in Fluidverbindung mit der Rekonstitutionseinheit steht und sich stromabwärts davon befindet.

4. Vorrichtung nach einem der vorhergehenden Ansprüche, wobei sowohl das erste Gefäß als auch das zweite Gefäß Einwegkapseln sind oder wobei das erste Gefäß und das zweite Gefäß Kammern einer Mehrkammer-Einwegkapsel sind.

5. Vorrichtung zum Zubereiten und Ausgeben von rekonstituiertem Bier, wobei die Vorrichtung umfasst:
• ein erstes Gefäß, das ein flüssiges Konzentrat zum Zubereiten eines Biers enthält, wobei das flüssige Konzentrat einen Ethanolgehalt von 0-1% ABV aufweist;
• ein zweites Gefäß, das eine alkoholische Flüssigkeit aufweist, wobei die alkoholische Flüssigkeit 12-100 Gew.-% Ethanol und 0-88 Gew.-% Wasser enthält, Ethanol und Wasser zusammen 80-100 Gew.-% der alkoholischen Flüssigkeit ausmachen; und wobei die alkoholische Flüssigkeit ferner 50-2.000 mg/l Hopfensäuren enthält, die aus Iso-alpha-Säuren, hydrierten Iso-alpha-Säuren, Huluponen und Kombinationen davon ausgewählt sind;
• eine Quelle von kohlesäurehaltigem Wasser;
• eine Rekonstitutionseinheit;
• eine Ausgabeeinheit zum Ausgeben des alkoholischen Biers;
wobei die Vorrichtung bedienbar ist, um (i) in der Rekonstitutionseinheit ein rekonstituiertes Bier zu erzeugen, das kohlesäurehaltiges Wasser aus der Quelle von kohlesäurehaltigem Wasser, flüssiges Konzentrat aus dem ersten Gefäß und alkoholische Flüssigkeit aus dem zweiten Gefäß umfasst und um (ii) das rekonstituierte Bier von der Ausgabeeinheit auszugeben.

6. Vorrichtung nach einem der vorhergehenden Ansprüche, wobei das flüssige Konzentrat einen Gehalt an freiem Aminostickstoff (FAN) in dem Bereich von 60-1.000 mg/l aufweist.

7. Vorrichtung nach einem der vorhergehenden Ansprüche, wobei das flüssige Konzentrat 250-3.000 µg/l Riboflavin enthält.

8. Vorrichtung nach einem der vorhergehenden Ansprüche, wobei das flüssige Konzentrat 10-100 g/l Maltotetraose enthält.

9. Vorrichtung nach einem der vorhergehenden Ansprüche, wobei das flüssige Konzentrat 0-100 mg/l Hopfensäuren, ausgewählt aus Iso-alpha-Säuren, hydrierten Iso-alpha-Säuren, Huluponen und Kombinationen davon, enthält.

10. Vorrichtung nach einem der vorhergehenden Ansprüche, wobei das flüssige Konzentrat ein flüssiges Konzentrat ist, das durch Entfernen von Wasser aus einem alkoholfreien Bier erhalten wird.

11. Vorrichtung nach Anspruch 10, wobei das flüssige Konzentrat durch Entfernen von Wasser aus einem alkoholfreien Bier mittels Membrantrennung und/oder Gefrierkonzentration erhalten wird, wobei die Membrantrennung aus Nanofiltration, Umkehrosmose und Vorwärtsosmose ausgewählt ist.

12. Vorrichtung nach einem der vorhergehenden Ansprüche, wobei die alkoholische Flüssigkeit ein Destillat umfasst, das durch destillative Entalkoholisierung eines alkoholhaltigen Biers erhalten wird.

13. Vorrichtung nach einem der vorhergehenden Ansprüche, wobei die alkoholische Flüssigkeit 100-1.500 mg/l Hopfensäuren, ausgewählt aus Iso-alpha-Säuren, hydrierten Iso-alpha-Säuren, Huluponen und Kombinationen davon, enthält.

14. Verfahren zum Zubereiten und Ausgeben eines rekonstituierten Biers unter Verwendung einer Vorrichtung nach Anspruch 1, wobei das Verfahren umfasst:
Wasser aus der Wasserquelle, Kohlendioxid aus der Quelle von unter Druck stehendem Kohlendioxid, flüssiges Konzentrat aus dem ersten Gefäß und alkoholische Flüssigkeit aus dem zweiten Gefäß in der Rekonstitutionseinheit mischen, um rekonstituiertes Bier zu erzeugen; und
Ausgeben des rekonstituierten Biers von der Ausgabeeinheit.

15. Verfahren zum Zubereiten und Ausgeben eines rekonstituierte Biers unter Verwendung einer Vorrichtung nach Anspruch 5, wobei das Verfahren umfasst:
kohlesäurehaltiges Wasser aus der Quelle von kohlesäurehaltigem Wasser, flüssiges Konzentrat aus dem ersten Gefäß und alkoholische Flüssigkeit aus dem zweiten Gefäß in der Rekonstitutionseinheit mischen, um rekonstituiertes Bier zu erzeugen; und
ausgeben des rekonstituierten Biers von der Ausgabeeinheit.

## Revendications

1. - Dispositif pour préparer et distribuer de la bière reconstituée, ledit dispositif comprenant :
- un premier récipient contenant un concentré liquide pour préparer une bière, ledit concentré liquide ayant une teneur en éthanol de 0 à 1% ABV (Alcool By Volume) ;
- un second récipient contenant un liquide alcoolisé, ledit liquide alcoolisé contenant 12 à 100 % en poids d'éthanol et 0 à 88 % en poids d'eau, l'éthanol et l'eau constituant ensemble 80 à 100 % en poids du liquide alcoolisé ; et contenant en outre 50 à 2000 mg/L d'acides de houblon choisis parmi les acides iso-alpha, les acides iso-alpha hydrogénés, les hulupones et leurs combinaisons ;
- une source d'eau ;
- une source de dioxyde de carbone sous pression ;
- une unité de reconstitution ;
- une unité de distribution pour distribuer la bière alcoolisée ;
le dispositif étant actionnable pour (i) former une bière reconstituée comprenant de l'eau provenant de la source d'eau, du dioxyde de carbone provenant de la source de dioxyde de carbone sous pression, du concentré liquide provenant du premier récipient et du liquide alcoolisé provenant du second récipient, dans l'unité de reconstitution, et (ii) distribuer la bière reconstituée à partir de l'unité de distribution.

2. - Dispositif selon la revendication 1, dans lequel les premier et second récipients sont en communication fluidique avec la source d'eau et situés en aval de celle-ci ; dans lequel l'unité de reconstitution est en communication fluidique avec le premier récipient, le second récipient et la source de dioxyde de carbone sous pression et située en aval de ceux-ci ; et dans lequel l'unité de distribution est en communication fluidique avec l'unité de reconstitution et située en aval de celle-ci.

3. - Dispositif selon la revendication 1, dans lequel le dispositif comprend en outre une unité de carbonatation qui est en communication fluidique avec la source d'eau et la source de dioxyde de carbone sous pression et située en aval de celles-ci ; et dans lequel le premier récipient et le second récipient sont en communication fluidique avec l'unité de carbonatation et situés en aval de celle-ci ; et dans lequel l'unité de distribution est en communication fluidique avec l'unité de reconstitution et située en aval de celle-ci.

4. - Dispositif selon l'une quelconque des revendications précédentes, dans lequel le premier récipient et le second récipient sont tous deux des capsules en portion individuelle, ou dans lequel le premier récipient et le second récipient sont des compartiments d'une capsule à compartiments multiples en portion individuelle.

5. - Dispositif pour préparer et distribuer de la bière reconstituée, ledit dispositif comprenant :
- un premier récipient contenant un concentré liquide pour préparer une bière, ledit concentré liquide ayant une teneur en éthanol de 0 à 1% ABV ;
- un second récipient contenant un liquide alcoolisé, ledit liquide alcoolisé contenant 12 à 100 % en poids d'éthanol et 0 à 88 % en poids d'eau, l'éthanol et l'eau constituant ensemble 80 à 100 % en poids du liquide alcoolisé ; et contenant en outre 50 à 2000 mg/L d'acides de houblon choisis parmi les acides iso-alpha, les acides iso-alpha hydrogénés, les hulupones et leurs combinaisons ;
- une source d'eau carbonatée ;
- une unité de reconstitution ;
- une unité de distribution pour distribuer la bière alcoolisée ;
le dispositif étant actionnable pour (i) former une bière reconstituée comprenant de l'eau carbonatée provenant de la source d'eau carbonatée, du concentré liquide provenant du premier récipient et du liquide alcoolisé provenant du second récipient, dans l'unité de reconstitution, et (ii) distribuer la bière reconstituée à partir de l'unité de distribution.

6. - Dispositif selon l'une quelconque des revendications précédentes, dans lequel le concentré liquide a une teneur en azote aminé libre (FAN) dans la plage de 60 à 1000 mg/L.

7. - Dispositif selon l'une quelconque des revendications précédentes, dans lequel le concentré liquide contient 250 à 3000 µg/L de riboflavine.

8. - Dispositif selon l'une quelconque des revendications précédentes, dans lequel le concentré liquide contient 10 à 100 g/L de maltotétraose.

9. - Dispositif selon l'une quelconque des revendications précédentes, dans lequel le concentré liquide contient 0 à 100 mg/L d'acides de houblon choisis parmi les acides iso-alpha, les acides iso-alpha hydrogénés, les hulupones et les combinaisons de ceux-ci.

10. - Dispositif selon l'une quelconque des revendications précédentes, dans lequel le concentré liquide est un concentré liquide qui est obtenu par élimination d'eau à partir d'une bière sans alcool.

11. - Dispositif selon la revendication 10, dans lequel le concentré liquide est obtenu par élimination d'eau à partir d'une bière sans alcool au moyen d'une séparation par membrane et/ou d'une concentration par congélation, dans lequel la séparation par membrane est choisie parmi la nanofiltration, l'osmose inverse et l'osmose directe.

12. - Dispositif selon l'une quelconque des revendications précédentes, dans lequel le liquide alcoolisé comprend un distillat obtenu par désalcoolisation par distillation d'une bière contenant de l'alcool.

13. - Dispositif selon l'une quelconque des revendications précédentes, dans lequel le liquide alcoolisé contient 100 à 1500 mg/L d'acides de houblon choisis parmi les acides iso-alpha, les acides iso-alpha hydrogénés, les hulupones et leurs combinaisons.

14. - Procédé de préparation et de distribution d'une bière reconstituée à l'aide d'un dispositif selon la revendication 1, ledit procédé comprenant :
mélanger de l'eau provenant de la source d'eau, du dioxyde de carbone provenant de la source de dioxyde de carbone sous pression, du concentré liquide provenant du premier récipient et du liquide alcoolisé provenant du second récipient dans l'unité de reconstitution pour former une bière reconstituée ; et
distribuer la bière reconstituée à partir de l'unité de distribution.

15. - Procédé de préparation et de distribution d'une bière reconstituée à l'aide d'un dispositif selon la revendication 5, ledit procédé comprenant :
mélanger de l'eau carbonatée provenant de la source d'eau carbonatée, du concentré liquide provenant du premier récipient et du liquide alcoolisé provenant du second récipient dans l'unité de reconstitution pour former une bière reconstituée ; et
distribuer la bière reconstituée à partir de l'unité de distribution.
